# EUROPÄISCHE PATENTSCHRIFT

(11) **EP 1 048 621 B1**
(45) Veröffentlichungstag und Bekanntmachung des Hinweises auf die Patenterteilung: **08.06.2005**
(21) Anmeldenummer: 00108626.3
(22) Anmeldetag: 20.04.2000
(51) Int. Cl.: C03B 17/06, C03B 33/08

(54) **Verfahren und Vorrichtung zur Herstellung von Einzelglasscheiben**
Method and apparatus for making single glass sheets
Procédé et appareil de fabrication de feuilles de verre simples

(30) Priorität: 27.04.1999 DE 19918936
(43) Veröffentlichungstag der Anmeldung: 02.11.2000
(73) Patentinhaber: SCHOTT AG, 55122 Mainz (DE)
(72) Erfinder: Ostendarp, Heinrich, Dr., 55128 Mainz (DE); Berndt, Andreas, Dr., 26121 Oldenburg (DE); Sünnemann, Rolf, 31074 Grünenplan (DE)
(74) Vertreter: Fuchs Mehler Weiss & Fritzsche

(56) Entgegenhaltungen:
- DE-A- 3 329 843
- DE-A- 19 649 488
- US-A- 2 505 103
- J.-L. LAMBERT: "Découpe d' un verre plat étiré à l' aide d' un laser au CO2" SILICATES INDUSTRIELS, Bd. 38, Nr. 7/8, 1973, Seiten 145-147, XP002160309

## Beschreibung

Die Erfindung betrifft ein Verfahren zur Herstellung von Einzelglasscheiben einer Dicke zwischen 0,03 mm und 2 mm, insbesondere von Glasscheiben für elektronische Geräte, bei dem ein Glasband vertikal aus einer Heißformgebungseinrichtung nach unten abgezogen wird und einer Schneidbearbeitung, die eine Bortenbeschneidung und/oder das Ablängen der Scheiben von Glasband umfaßt, sowie gegebenenfalls Folgeprozessen unterzogen wird. Die Erfindung bezieht sich auch auf eine Vorrichtung zur Herstellung der Glasscheiben sowie auf eine Vorrichtung zur Überwachung der vertikalen Ausrichtung der Bänder von kontinuierlich hergestellten vertikalen Glasbändern.

Glasscheiben für elektronische Geräte, wie z.B. für Laptops, die auch als Displayglas bezeichnet werden, werden bevorzugt in einer Dicke von 0,4 bis 2 mm hergestellt. Im Zuge der Erzielung spezieller Produkteigenschaften von elektronischen Geräten werden aber auch Glasscheiben einer Dicke bis hinab zu 30 bis 50 µm hergestellt. Einerseits handelt es sich um ein Produkt, an das sehr hohe Anforderungen bezüglich Planität gestellt werden, andererseits ist es ein Massenprodukt, das möglichst kostengünstig produziert werden muß. Um zu vertretbaren Herstellungskosten zu gelangen, muß der Ausschuß, d.h. Scheiben mit Dickenschwankungen, reduziert und der Verschnitt minimiert werden.

Die Glasscheiben werden üblicherweise von einem kontinuierlich erzeugten Glasband abgetrennt, das vertikal von einer Ziehdüse abgezogen wird.

Hierzu wird eine Zieheinrichtung mit mehreren Rollenpaaren verwendet, die an der Borte des Glasbandes angreifen. Obwohl die Ziehgeschwindigkeit an beiden Seiten identisch ist, kommt es zu Geradheitsabweichungen des Glasbandes. Schon 0,1 mm Abweichung auf einer Länge von etwa 400 mm sind für ein Heraustrennen exakt rechteckiger Scheiben zu viel, da nicht wie in konventionellen Prozeßfolgen zunächst grob abgelängt wird, sondern direkt aus dem Band ohne Verlust von Zwischenstücken die Scheiben abgetrennt werden.

Ferner bedingt ein Schräglaufen des Glasbandes, daß die Ziehrollenpaare relativ zum Glas an einer Seite nach innen und an der anderen Seite nach außen wandern. Der Bortenverschnitt muß daher entweder mit einer Sicherheitsmarge berücksichtigt werden oder die Lage der Schneidköpfe muß der Lage des Glasbandes angepaßt werden.

Bisher werden die Scheiben vom vertikalen Glasband abgetrennt, wobei der Schnitt quer über die Glasbandbreite geführt wurde. Während des Ablängvorgangs ändert sich die durch das Gewicht der abzulängenden Scheibe bedingte Ziehkraft des Glasbandes ständig, was zu Rückkopplungen auf die Heißformgebung führt. Anderenfalls pflanzt sich ein durch den Schneidprozeß entstandener Riß leicht bis in den Heißformgebungsbereich fort, was das gesamte Heißformgebungsaggregat stoppt. Rückkopplungen auf die Heißformgebung bedingen zudem nachteilige Dickenschwankungen in dem nachfolgenden Glasband, was wiederum den Ausschuß erhöht. Ebenfalls pflanzen sich Schwingungen durch den Schneidprozeß bis zur Heißformgebung fort.

Aus Kitaigorodski, Technologie des Glases 1957, S. 227-228 ist es bekannt, ein Glasband aus der freien Oberfläche der Schmelze nach oben abzuziehen und das noch plastische Glasband über eine gekühlte Biegewalze mit einem Durchmesser von wenigen Dezimetern in die Horizontale umzulenken.

Aus der DE-OS 2118589 ist ebenfalls eine Vorrichtung zum Umlenken in die Horizontale bekannt, bei der eine Umlenk-Walze eingesetzt wird, zwischen der und dem Glasband ein Gaspolster erzeugt wird, so dass das Glasband die Walze nicht berührt. Das Glasband wird nach oben oder nach unten abgezogen und ist wegen der hohen Glastemperatur noch plastisch, wenn es umgelenkt wird. Kantenrollen werden als Bestandteil der Umlenkwalze zur Bandführung eingesetzt. Durch Aufrechterhaltung eines Druckdifferentials im Gaspolster können Unterschiede in den Zugkräften in Längsrichtung des Glasbandes im Biegebereich kompensiert werden.

Aus US-PS 2,505,103 ist es bekannt, das nach unten abgezogene weiche Glasband über eine Umlenkkurve in die Horizontale umzulenken. Damit das Glasband nicht mit der Oberfläche der Umlenkkurve in Kontakt treten kann, wird zwischen dem Glasband und der Umlenkkurve ein Gaspolster erzeugt.

Aus Derwent-Abstract zu SU 546573 A sind Photodetektoren zur Überwachung des Glasrandes bekannt, wobei die Photosensoren zur Signalanzeige dienen, ohne dass sie zur Regelung der Ziehgeschwindigkeit eingesetzt werden.

Vor diesem Hintergrund ist es Aufgabe der Erfindung, eine Vorrichtung und ein Verfahren bereitzustellen, mit dem einzelne, rechteckige Glasscheiben aus einem vertikalen aus einer Heißformgebungseinrichtung abgezogenen Glasband als Inline-Schritt bei geringem Verschnitt und Ausschuss abgetrennt werden können.

Diese Aufgabe wird mit einem Verfahren gelöst, bei dem nach dem Abziehen das vertikale Glasband auf eine Temperatur unterhalb des unteren Kühlpunktes des Glases, bei der das Glas eine Viskosität von 10^{14,5} dPa·s hat, abgekühlt und anschließend unter Einhaltung eines Umlenkradius zwischen 0,1 m und 4 m frei hängend in die Horizontale überführt wird und bei dem jedenfalls das Ablängen am horizontalen Glasband ausgeführt wird. Am unteren Kühlpunkt (strain point) beträgt die Viskosität des Glases η= 10^{14,5} dPa·s.

In einer bevorzugten Ausführungsform wird die vertikale Ausrichtung ständig überwacht und geregelt, um den Ausschuss zu minimieren.

Die vertikale Ausrichtung beinhaltet die Geradheit, die Lage und den Winkel des Glasrandes. Unter Geradheit wird das Maß der Bortendurchbiegung des Glasbandes verstanden. Die Geradheit ist gering, wenn die Bortendurchbiegung groß ist. Die Lage des Glasbandes betrifft die seitliche Parallelverschiebung des Glasbandes, wenn das gesamte Band seitlich versetzt ist. Mit dem Winkel wird das Schräghängen des Glasbandes, d.h. die Abweichung von der Vertikalen bezeichnet.

Es hat sich herausgestellt, dass die Schneidbearbeitung des Glasbandes einfach und ohne Rückwirkung auf die Heißformgebung des nachfolgenden Glasbandes durchgeführt werden kann, wenn das Glasband sich hierbei in einer horizontalen Lage befindet. Hierdurch erfolgt eine Entkopplung der folgenden Produktionsschritte von der Heißformgebung, so dass eine Stabilisierung des vertikalen Glasbandes eintritt und eventuell auftretende Schwingungen allenfalls gedämpft auf das vertikale Band übertragen werden. Das Ablängen der Glasscheiben hat keinerlei Einfluss auf die Zugkraft am vertikalen Band. Die Prozessstabilität der gesamten Prozesskette wird dadurch erheblich verbessert. Ein weiterer Vorteil besteht darin, dass ein sich beim Schneiden eventuell auftretender Riss in Richtung Heißformgebungseinrichtung nur bis zum Umlenkbereich fortgesetzt und dort gestoppt wird.

Die Schneidbearbeitung am horizontalen Glasband erfordert eine Umlenkung des vertikalen Glasbandes, das man bisher bei Glas der Stärke 0,4 mm bis 2 mm nicht für durchführbar gehalten hat. Da Glas ein sprödes Material ist, war man der Auffassung, dass ab einer Glasstärke von etwa 0,4 mm die Biegesteifigkeit bei niedrigen Temperaturen bereits zu groß ist, so dass eine Umlenkung um etwa 90 Grad ohne Glasbruch nicht durchführbar sei. Es hat sich jedoch überraschend herausgestellt, dass bei Einhaltung eines Umlenkradius zwischen 1,5 m and 4 m eine prozessstabile Umlenkung des frei hängenden Glasbandes möglich ist. Tendentiell ist der Umlenkradius bei Dicken nahe 2 mm eher bei 3 bis 4 m zu wählen. So kann der Umlenkradius beispielsweise bei 1,1 mm dickem Glas 2 m und bei 1,9 mm dickem Glas 3 bis 4 m betragen. Damit hierbei keine plastische Verformung des Glases eintritt, muß darauf geachtet werden, daß die Temperatur des umzulenkenden Glasbandes sich bereits unterhalb der des unteren Kühlpunktes des Glases befindet.

Bei dünneren Gläsern einer Dicke zwischen 0,03 mm und 0,4 mm hat es sich herausgestellt, daß eine Umlenkung um etwa 90° ohne Glasbruch durchführbar ist, auch wenn Umlenkradien gewählt werden, die zwischen 0,1 m und 1,5 m liegen. Tendentiell ist bei Dicken nahe 0,4 mm eher ein Umlenkradius bei 1 bis 1,5 m zu wählen.

Ein bevorzugtes Verfahren bei Gläsern einer Dicke zwischen 0,03 mm und 0,4 mm besteht darin, nach der Bortenbeschneidung das Glas aufzurollen oder zu wickeln statt es abzulängen. Dies vereinfacht den Transport und es kann zu einem späteren Zeitpunkt entrollt und geschnitten werden. Das Glas kann enger gewickelt werden, als es zuvor umgelenkt worden ist. Der kleinstmögliche Wickelradius beträgt dabei die Hälfte des Umlenkradius.

Ein bevorzugtes Verfahren bei Gläsern einer Dicke zwischen 0,03 mm und 2 mm besteht darin, sowohl die Bortenbeschneidung als auch das Ablängen am Glasband in der Horizontalen auszuführen. Die entstandenen Glasscheiben können anschließend sofort endbearbeitet werden.

Das Glasband wird vor der Umlenkzone soweit abgekühlt, daß es im Umlenkbereich eine Temperatur, vorzugsweise zwischen 30 und 80° C, aufweist. Hierbei ist eine gezielte Abkühlung durch Kühleinrichtungen nicht unbedingt erforderlich, wenn der Weg zwischen Formgebungseinrichtung und Umlenkzone entsprechend groß gewählt wird, so daß sich das Glasband von selbst abkühlt. Da der Umlenkradius > 1,5 m ist, kann die Umlenkung auch bei Glastemperaturen im Bereich der Raumtemperatur durchgeführt werden.

Abweichungen von der Geradheit des Glasbandes potenzieren sich bei der Umlenkung des Glasbandes in ihrer Wirkung so, daß bei nicht geradem Glasband kein prozeßstabiles Umlenken möglich ist. Dieses Problem wird dadurch verhindert, daß die Geradheit des Glasbandes, dessen Lage relativ zu den Ziehwalzen und/oder der Winkel der Glasränder ständig überwacht wird. Da eine Ebene des vertikalen Glasbandes durch die Zieheinrichtung fixiert ist, muß ein laterales Wandern in der Zieheinrichtung, d.h. eine Abweichung der , Bandebene von der Vertikalen verhindert werden. Die Überwachung beinhaltet die Messung auftretender Abweichungen von der Geradheit des Glasbandes und/oder dessen Lage und/oder des Winkels und die Steuerung der Zieheinrichtung zur Korrektur der Abweichungen und Einstellung der Geradheit des Glasbandes und/oder dessen Lage und/oder des Winkels. Diese Überwachung erfolgt vorzugsweise an mindestens einer Borte.

Vorzugsweise werden bei der Überwachung der vertikalen Ausrichtung sowohl translatorische Bewegungen des gesamten Glasbandes in der Bandebene und/oder Durchbiegungen der Glasborte erfaßt und beispielsweise durch Anpassung der Ziehgeschwindigkeit bzw. der Ziehgeschwindigkeitsdifferenz zwischen linker und rechter Borte oder der Ziehkraft bzw. deren Differenz an den beiden gegenüberliegenden Seiten des Glasbandes kompensiert. Dies kann beispielsweise durch eine Schlupfregelung bewerkstelligt werden.

Vorzugsweise wird die Vorschubgeschwindigkeit des horizontalen Glasbandes unter Berücksichtigung des Umlenkradius geregelt. Änderungen des Umlenkradius entstehen durch unterschiedliche Vorschubgeschwindigkeiten des vertikalen und horizontalen Glasbandes, beispielsweise Schwankungen bei der Heißformgebung.

Hierbei hat sich überraschend herausgestellt, daß kurzzeitige Schwankungen in der Vorschubgeschwindigkeit nicht zu einem Bruch des Glasbandes in der Biegezone führen, sondern daß solche Schwankungen in der Biegezone abgefedert werden können. Erst wenn Geschwindigkeitsdifferenzen länger anhalten, so daß das Glasband in der Biegezone stärker gespannt oder gestaucht wird, wobei unter lang anhaltenden Änderungen des Umlenkradius vorzugsweise solche von mehr als 8 bis 12 sec verstanden werden, wird die Vorschubgeschwindigkeit des horizontalen Glasbandes entsprechend verändert und angepaßt.

Die Schneidbearbeitung wird vorzugsweise mittels Laserstrahlen durchgeführt. Dies hat den Vorteil, daß keine mechanischen Kräfte auf das Glasband ausgeübt werden, die einerseits zu einer Rißbildung führen und andererseits unter Umständen Rückwirkungen auf die Heißformgebung haben. Ein Laserstrahlschneidprozeß bietet den Vorteil, daß keine Kontamination der Glasoberfläche mit Schneidsplittern auftreten kann. Als geeignetes Verfahren ist das aus der DE-PS 197 15 537 bekannte Verfahren anzusehen.

Da das Glasband beim Ablängen nicht angehalten wird, wird das Schneidwerkzeug entsprechend der Vorschubgeschwindigkeit des Glasbandes mitbewegt.

Vorzugsweise werden nach der Bortenbeschneidung und vor dem Ablängen die Kanten bearbeitet. Die Kantenbearbeitung kann mit verschiedenen Prozessen durchgeführt werden. So bieten sich ebenfalls Laserverfahren an, bei denen beispielsweise nur die Fasen der Borten entfernt werden. Es ist von Vorteil, wenn alle Schneidprozesse mittels Laser stattfinden, da ansonsten die verbleibenden Stirnflächen der Schneidkanten u.U. Mikrorisse aufweisen können, was insbesondere bei Displayglas nicht zulässig ist.

Eine andere Alternative der Kantenbearbeitung ist der Einsatz spezieller Schleifspindeln, die bei geringen Kräften auf das Glas eine hohe Abtragsleistung bei geringen Rauhheiten erlauben. Hierzu geeignet sind beispielsweise ultraschallunterstützte Schleifspindeln. Die auf den ultraschallunterstützten Schleifspindeln angebrachten Schleifscheiben werden durch die Einkopplung einer mechanischen Schwingung von einigen kHz, beispielsweise 20 kHz zu axialen Eigenschwingungen angeregt, wodurch sich der äußere Schleifscheibendurchmesser periodisch mit der Schwingungsfrequenz um einige µm vergrößert. Gleichzeitig dreht sich die Schleifscheibe wie eine konventionelle Schleifscheibe und durch die Überlagerung von Schwingungsbewegung und Drehbewegung erhöht sich die Zerspanungsleistung bei identischer Oberfläche des Glases drastisch. Die Schleifkräfte auf das Glas werden im Vergleich zu einer konventionellen Kantenbearbeitung wesentlich geringer, was die Integrierbarkeit in eine Inline-Anlage durch vereinfachte Handhabungssysteme wesentlich erleichtert.

Nach der Kantenbearbeitung erfolgt eine Eckenbearbeitung, die wiederum beispielsweise unter Zuhilfenahme ultraschallunterstützter Schleifspindeln durchgeführt werden kann. Die Kantenbearbeitung kann auch nach dem Ablängen durchgeführt werden, da auch die Kanten, an denen die Scheibe abgelängt worden ist, einer Kantenbearbeitung unterzogen werden müssen.

Vorzugsweise wird das Glasband beim Kantenbearbeiten und/oder Randbeschneiden zugspannungsfrei gehalten. Ein geeignetes Verfahren wird beispielsweise in der DE-OS 196 49 488 beschrieben. Zur Handhabung von Dünnglasscheiben in Transportsystemen, Bearbeitungsanlagen und dgl. sind zwei Platten mit zumindest einseitig ebenen Oberflächen vorgesehen, die in einem für die berührungsfreie Aufnahme der Glasscheibe ausreichenden Abstand parallel zueinander angeordnet sind, wobei die Platten eine Vielzahl von Gasdurchtrittsöffnungen aufweisen und die Gasdurchtrittsöffnungen in einer Platte über einen oder mehrere Kanäle oder dergleichen mit je einer Gasfördereinrichtung zur Erzeugung von Überdruck oder Unterdruck verbindbar sind. Wenigstens ein Teil der Gasaustrittsöffnungen ist paarweise einander gegenüberliegend angeordnet. Auf diese Weise wird erreicht, daß keine Druck- oder Zugkräfte auf die Glasplatte bzw. auf das Glasband ausgeübt werden. Wenn dieses Verfahren mit einem Laserschneidprozeß kombiniert wird, ist das gesamte Verfahren zum Abtrennen bzw. zur Kantenbearbeitung berührungsfrei. Diese Art der Handhabung kann aber auch mit konventionellen Transportmitteln wie beispielsweise Rollen oder Gurten kombiniert werden. Hier wird das Glas vorwiegend im Seitenbereich durch die Transportmittel berührt.

Bei sehr breiten Glasbändem kann noch eine mittige Schneideinrichtung zum Längsschneiden des Glasbandes vorgesehen sein.

Die Vorrichtung zur Herstellung von Einzelglasscheiben sieht erfindungsgemäß vor, dass im Bereich der vertikalen Zieheinrichtung Sensoren zur Überwachung der vertikalen Ausrichtung angeordnet sind, die über eine Reglereinrichtung mit der Zieheinrichtung verbunden sind, und dass unterhalb der Zieheinrichtung eine horizontale Tansporteinrichtung angeordnet ist, wobei die Schneideinrichtung zum Ablängen im Bereich der horizontalen Transporteinrichtung angeordnet ist. Zwischen der Zieheinrichtung und der horizontalen Transporteinrichtung ist eine Biegezone vorgesehen, in der das Glasband frei hängend in die Horizontale umgelenkt wird. Zwischen der Formgebungseinrichtung und der Biegezone ist der Weg so groß gewählt und/oder es sind Kühleinrichtungen vorgesehen, womit das Glasband so gekühlt wird, dass es in der Biegezone eine Temperatur unterhalb des unteren Kühlpunktes hat. Im Bereich der Biegezone ist eine Einrichtung zur Überwachung des Umlenkradius bzw. der Größe des Durchhangs des frei hängenden Glasbandes angeordnet. Abhängig von dem gemessenen Umlenkradius des umgelenkten Glasbandes wird die Transportgeschwindigkeit geregelt, so dass im zeitlichen Mittel die Durchbiegung konstant bleibt.

Die Schneideinrichtung weist mindestens einen Laser auf. In die Schneideinrichtung kann eine Kantenbearbeitungseinrichtung integriert sein. Die Reihenfolge von Schneiden und Ablängen sowie der Kantenbearbeitung kann beliebig gewählt werden.

Die Sensoren für die Überwachung der Abweichung der vertikalen Ausrichtung können mechanische oder optische Sensoren sein. Es werden mechanische Sensoren bevorzugt, wie im Zusammenhang mit der Vorrichtung zur Überwachung der Geradheit der Borten noch eingehend beschrieben wird.

Die Einrichtung zur Überwachung des Umlenkradius bzw. der Größe des Durchhangs umfaßt in einer Ausführung mindestens einen in radialer Richtung angeordneten Ultraschallabstandssensor und eine Reglereinrichtung. Die Reglereinrichtung ist mit der Transporteinrichtung verbunden, so daß in Abhängigkeit von dem Umlenkradius eine Anpassung der Vorschubgeschwindigkeit erreicht werden kann.

Die Vorrichtung zur Überwachung der vertikalen Ausrichtung der Borten von kontinuierlich hergestellten vertikalen Glasbändern ist gekennzeichnet durch mindestens drei die Glasborte überwachende Sensoren, die an einer gemeinsamen Halterung angeordnet sind, die an einem ortsfesten Trägerelement gehalten ist.

Vorzugsweise werden die Sensoren zur Überwachung des Glasrandes durch Rollen gebildet, die an der Glasborte anliegen, wobei mindestens eine Rolle bezüglich der Halterung verschiebbar und die Halterung beweglich an dem ortsfesten Trägerelement angeordnet ist und wobei sowohl an der verschiebbaren Rolle als auch an der Halterung jeweils mindestens ein Verschiebungssensor angeordnet ist.

Die Rollenachsen sind vorzugsweise senkrecht zur Glasbandebene ausgerichtet.

Die Rollen bilden mechanische Sensoren, mit denen nicht nur eine translatorische Seitwärtsbewegung des Glasbandes oder der Abweichungswinkel von der Vertikalen sondern aufgrund der beweglichen Rolle auch eine Durchbiegung der Glasborte erfaßt werden können.

Vorzugsweise ist die verschiebbare Rolle zwischen den beiden anderen Rollen angeordnet. Bei einer Durchbiegung des Glasbandes ändert sich die Lage der Halterung nicht, lediglich die bewegliche Rolle wird ihre Lage verändern, so daß die Durchbiegung erfaßt werden kann. Der Abstand der Rollen muß möglichst groß gewählt werden, damit die nicht beweglich an der Halterung befestigten Rollen am oberen und unteren Ende als Referenzpunkte dienen können. Typische Rollenabstände liegen bei 60 cm bis 100 cm.

Die Halterung ist vorzugsweise derart an dem ortsfesten Trägerelement aufgehängt, so daß bei einer translatorischen Bewegung des Glasbandes die gesamte Halterung mitwandern kann. Zwischen Halterung und Trägerelement ist vorzugsweise ein Verschiebesensor angeordnet.

Die Halterung wird mit einer Kraft F1 gegen die Borte der Glasscheibe gedrückt. Die Kraft, mit der die verschiebbare Rolle gegen das Glasband gedrückt wird, beträgt F2, wobei zwischen diesen beiden Kräften, vorzugsweise die Beziehung F2 < < 2F1 besteht.

Wenn von dieser Vorrichtung eine Abweichung von der vertikalen Ausrichtung gemessen wird, wird das Meßergebnis an eine Reglereinrichtung weitergegeben, die mit der Zieheinrichtung verknüpft ist. Die Ziehrollen werden vorzugsweise auf beiden Seiten von eigenen Antriebseinrichtungen angetrieben, so daß eine individuelle Steuerung der Ziehgeschwindigkeit auf beiden Seiten des Glasbandes möglich ist. Durch gezielte Einstellung einer Differenzgeschwindigkeit zwischen den Ziehrollen kann die Abweichung von der Geradheit kompensiert und wieder auf die ursprüngliche Ausrichtung zurückgeführt werden. Die Geschwindigkeitsdifferenz ist hierbei sehr klein im Vergleich zur Absolutgeschwindigkeit.

Da es bei der vertikalen Ausrichtung bereits auf kleine Abweichungen ankommt und die Überwachungsvorrichtung in einem Bereich, vorzugsweise innerhalb der Zieheinrichtung angeordnet ist, wo noch relativ hohe Glastemperaturen vorliegen, ist es wichtig, daß das Material nicht von Temperaturschwankungen beeinflußt wird. Es ist daher vorgesehen, daß die Halterung aus einem Material besteht, dessen Wärmeausdehnungskoeffizient in einem Bereich von Raumtemperatur bis etwa 200°C nahezu Null ist.

Vorteilhafte Ausgestaltungen der Erfindung werden nachfolgend anhand der Zeichnungen näher erläutert.

Es zeigen:
- Fign. 1,2: Seitenansichten der Vorrichtung zur Herstellung von Glasscheiben,
- Fig. 3: eine Draufsicht der in Figur 1 gezeigten Vorrichtung,
- Fign. 4,5: die Vorrichtung zur Überwachung der vertikalen Ausrichtung des Glasbandes im Falle von zwei typischen Problemstellungen,
- Fign. 6-8: die Vorrichtung zur Überwachung der vertikalen Ausrichtung gemäß einer weiteren Ausführungsform im Fall von drei typischen Problemstellungen,
- Fig. 9: eine vergrößerte Darstellung der Biegezone.

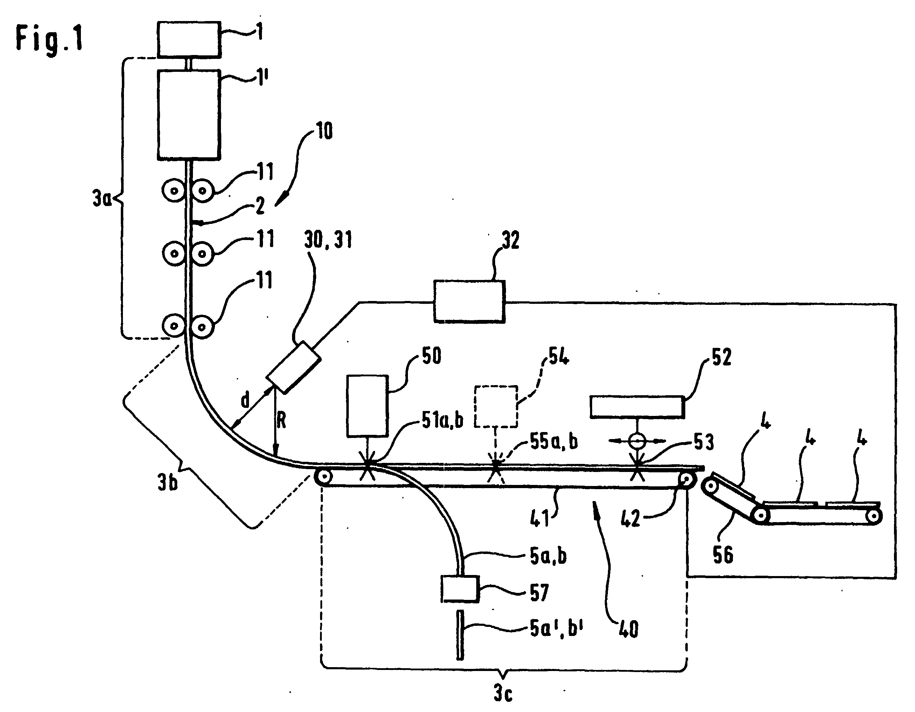

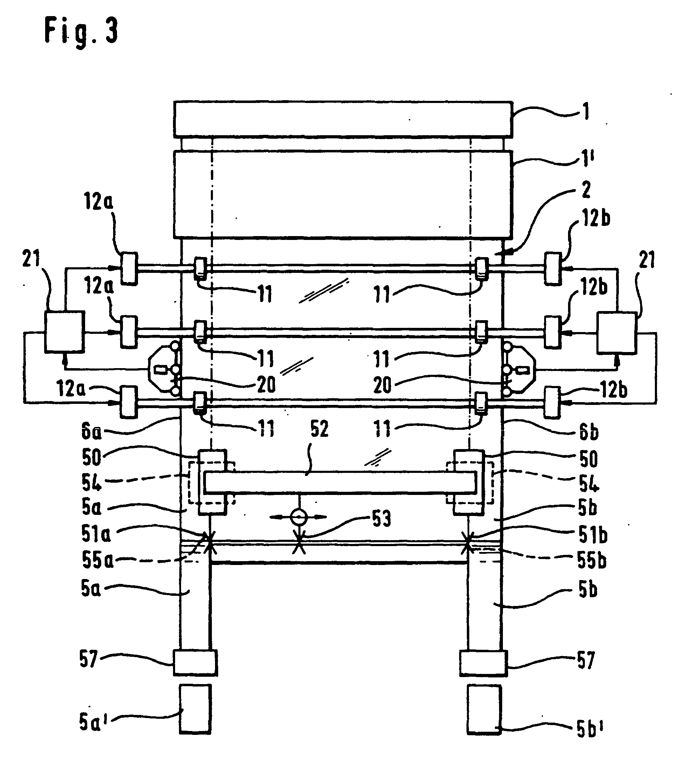

In der Figur 1 ist die Gesamtanlage in Seitenansicht dargestellt. Die Glasschmelze befindet sich in einer Wanne mit einer Formgebungseinrichtung 1, aus der ein Glasband 2 vertikal nach unten abgezogen wird und anschließend eine Abkühlstrecke 1' durchläuft. Die Zieheinrichtung 10 umfäßt in der hier gezeigten Darstellung mehrere Ziehrollenpaare 11, die, wie in der Figur 3 zu sehen ist, an der jeweiligen Borte des Glasbandes 2 angreifen. Auf dem Weg nach unten wird das Glasband 2 bis unterhalb des unteren Kühlpunktes abgekühlt, so daß sich hieran die Umlenkung in eine horizontale Richtung anschließen kann.

Am Beispiel von 0,55 mm dickem Glas weist das Glas eine Temperatur von 70° C beim Eintritt in den Umlenkprozeß und eine Temperatur von 40° C nach dem Umlenkprozeß auf. Bei anderen Glasdicken variieren die Temperaturen leicht. Während des Umlenkprozesses sinkt die Temperatur näherungsweise linear ab. Die Umlenkung kann auch durchgeführt werden, wenn das Glasband Raumtemperatur aufweist.

Im Bereich der Zieheinrichtung 10 wird das Glasband 2 als vertikales Glasband 3a bezeichnet. Die sich hieran anschließende Biegezone 3b ist so groß gewählt, daß sich ein Umlenkradius R von etwa 1,50 m oder mehr einstellt. Die Umlenkung erfolgt frei hängend, d.h. ohne zusätzliche Biegewalze.

Anschließend geht das Glasband 2 in das horizontale Glasband 3c über, das auf einer Transporteinrichtung 40 mit Transportband 41 und Antriebseinrichtung 42 aufliegt. Oberhalb der Transporteinrichtung 40 sind eine Bortenbeschneidungseinrichtung 50 mit Lasern und gegebenenfalls Kühleinrichtungen sowie eine Ablängeinrichtung 52 angeordnet. Die Ablängeinrichtung 52, die auch eine Kühleinrichtung umfassen kann, wird entsprechend der Vorschubgeschwindigkeit des horizontalen Glasbandes 3c mitbewegt.

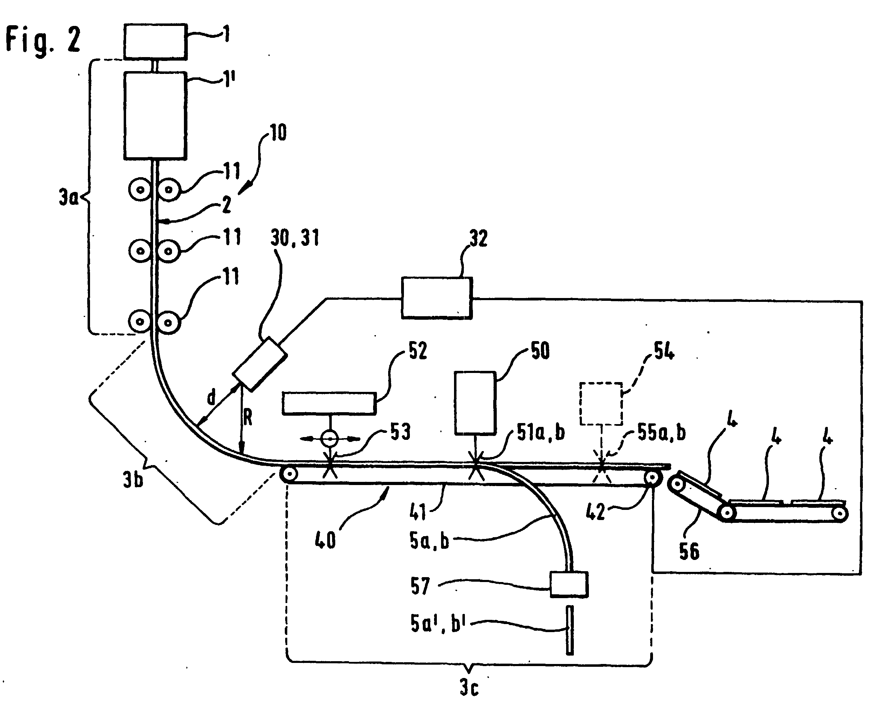

Findet zunächst der Bortenschnitt und dann der Ablängschnitt statt, so kann zwischen diesen beiden Einrichtungen 50 und 52 noch eine Kantenbearbeitungseinrichtung 54 vorgesehen werden. Die Bearbeitungseinrichtungen 50,52,54 arbeiten bevorzugt mit Laserstrahlen 51a, b, 53 und 55a,b, die in den Figuren 1 und 2 nur schematisch angedeutet sind. Mit der Bortenbeschneidungseinrichtung 50 werden die Glasborten 5a,b abgetrennt und in der Bortenabschnittbrecheinrichtung 57 in die Bortenstücke 5a',b' geschnitten. Wie in der Figur 3 zu sehen ist, ist der Rand so breit eingestellt, daß eventuelle Deformationen durch die Ziehrollen 11 erfaßt und verworfen werden können.

Im Bereich der Biegezone 3b ist eine Durchhangregelung mit einer Überwachungseinrichtung 30 für die Durchhängung des Umlenkradius R angeordnet. Es handelt sich hierbei um einen Ultraschallabstandssensor 31, der in radialer Richtung auf die Oberfläche des Glasbandes gerichtet ist. Der Abstandssensor 31 ist an eine Reglereinrichtung 32 angeschlossen, die wiederum mit der Antriebseinrichtung 42 der Transporteinrichtung 40 verbunden ist. Wenn eine Änderung des Umlenkradius R auftritt, wird von der Reglereinrichtung 32 zunächst überprüft, ob es sich um eine kurzzeitige Änderung oder Schwankung handelt. Wenn dies der Fall sein sollte, wird die Änderung des Umlenkradius in Kauf genommen, so daß die Transportgeschwindigkeit des horizontalen Glasbandes 3c unverändert beibehalten werden kann. Wenn es sich allerdings um länger andauernde Schwankungen handeln sollte, muß eine Korrektur der Vorschubgeschwindigkeit vorgenommen werden. In die Reglereinrichtung 32 können entsprechende Grenzwerte eingegeben werden, wobei bevorzugt erst bei Schwankungen > 10 sec. die Vorschubgeschwindigkeit des horizontalen Glasbandes 3c geändert wird. Es wird dann ein entsprechendes Signal an die Antriebseinrichtung 42 gegeben, so daß eine Anpassung an die Änderung des Umlenkradius vorgenommen werden kann, so daß in der Folge die Durchhängung im Umlenkbereich wieder auf den ursprünglichen Wert eingestellt werden kann. Eine derartige Ausführungsform kann vorzugsweise durch einen PI-Regler realisiert werden.

In der Fig. 2 ist die Reihenfolge der Einrichtungen 52,50 und 54 vertauscht. In beiden Figuren ist die Ablängeinrichtung 52 eine Ablängritzeinrichtung. Durch das Abknicken der Transporteinrichtung 40 im Bereich der Ablängbrecheinrichtung 56 werden die Einzelscheiben 4 gebildet (s. auch Fig. 1). Da in der Fig. 2 das Ritzen des Glasbandes mittels der Ablängeinrichtung 52 vor der Bortenbeschneidung in der Bortenbeschneidungseinrichtung 50 erfolgt, brechen die Borten 5a,b bei der Bortenbeschneidung von selbst in einzelne Bortenstücke 5a',b'.

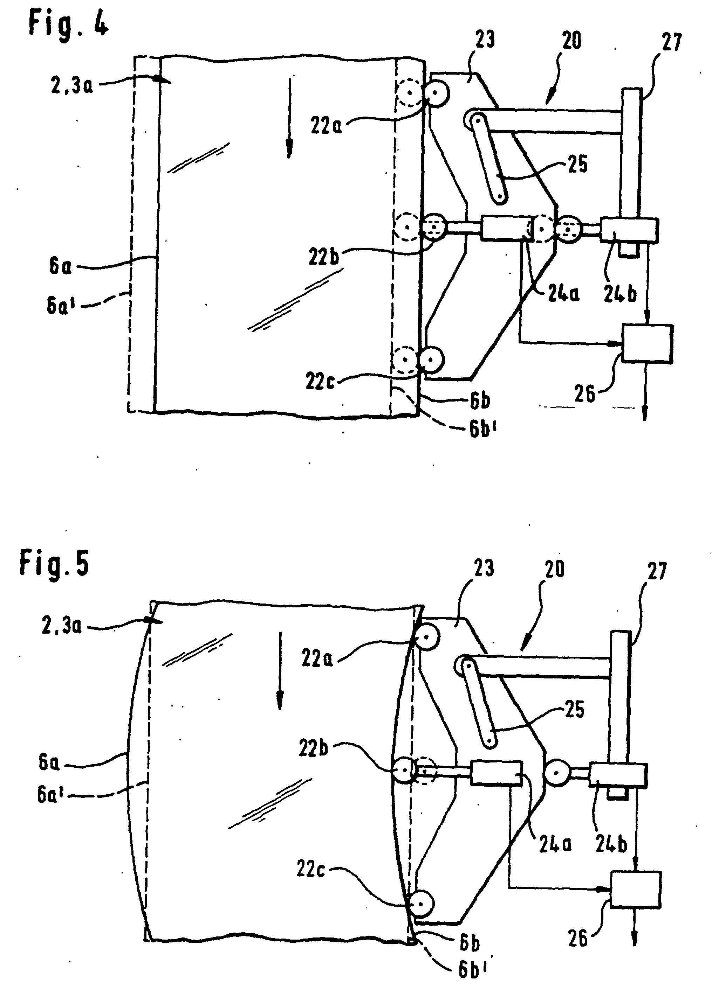

In der Figur 3 ist an den seitlichen Borten 6a, b jeweils eine Vorrichtung 20 zur Überwachung der vertikalen Ausrichtung des Glasbandes angeordnet. Diese Vorrichtung wird im Zusammenhang mit Figuren 4 bis 8 näher erläutert. Diese Überwachungseinrichtung 20 ist an eine Reglereinrichtung 21 angeschlossen, die wiederum mit den Antriebseinrichtungen 12a bzw. 12b der Ziehrollenpaare 11 verknüpft ist. Bei einer Abweichung von der Geradheit können somit die Ziehrollenpaare 11 individuell angesteuert werden und durch eine Veränderung der Differenz der Ziehgeschwindigkeit kann die Geradheit wieder auf die Sollausrichtung zurückgefahren werden.

In der Figur 4 ist eine translatorische Seitwärtsbewegung des Glasbandes 2, 3a schematisch dargestellt. Die ursprüngliche vertikale Ausrichtung ist durch die gestrichelt eingezeichnete Borte 6a', 6b' dargestellt. Das Glasband ist um einen bestimmten Betrag nach rechts gewandert, so daß nunmehr die Position der Borte 6a, 6b eingenommen wird. An der rechten Borte ist eine Überwachungseinrichtung 20 angeordnet, die eine Halterung 23 aufweist, an der drei Rollen 22a, b, c angeordnet sind. Der Abstand der Rollen ist möglichst groß gewählt, um bereits geringfügige Änderungen in der Bortenverschiebung detektieren zu können. Während die beiden Rollen 22a, b ortsfest bezüglich der Halterung 23 angeordnet sind, ist die mittlere Rolle 22b verschiebbar gelagert und mit einem ersten Verschiebesensor 24a gekoppelt. Die Rolle 22b wird mittels einer Feder der Kraft F2 gegen die Borte 6b des Glasbandes 2 gedrückt. Die Halterung 23 ist über ein Hebelgestänge 25 mit einem ortsfesten Trägerelement 27 verbunden. In der hier gezeigten Darstellung hat sich die gesamte Rollenhalterung 23 und damit auch die drei Rollen 22a, b, c aus ihrer gestrichelten Position in die dargestellte Position bewegt. Diese Abweichung wird von dem Verschiebesensor 24b nachgewiesen. Beide Sensoren 24a,b sind an eine Rechnereinheit 26 angeschlossen.

In der Figur 5 ist eine andere Problemstellung dargestellt. Es handelt sich hierbei um eine Durchbiegung der Glasborten 6a,b. Während die Rollen 22a, c kaum ihre Lage verändert haben, ist die mittlere Rolle 22b deutlich nach links ausgelenkt, was von dem Verschiebesensor 24a nachgewiesen wird. Durch entsprechende Signale der Sensoren 24a bzw. 24b an die im Zusammenhang mit der Figur 3 diskutierte Reglereinrichtung 21 kann eine Anpassung der Antriebsgeschwindigkeit der Ziehrollen 11 vorgenommen werden. Die Rollenhalterung 23 wird mit einer Kraft F1 gegen die Borte 6b gedrückt, wobei F2 deutlich geringer ist als F1.

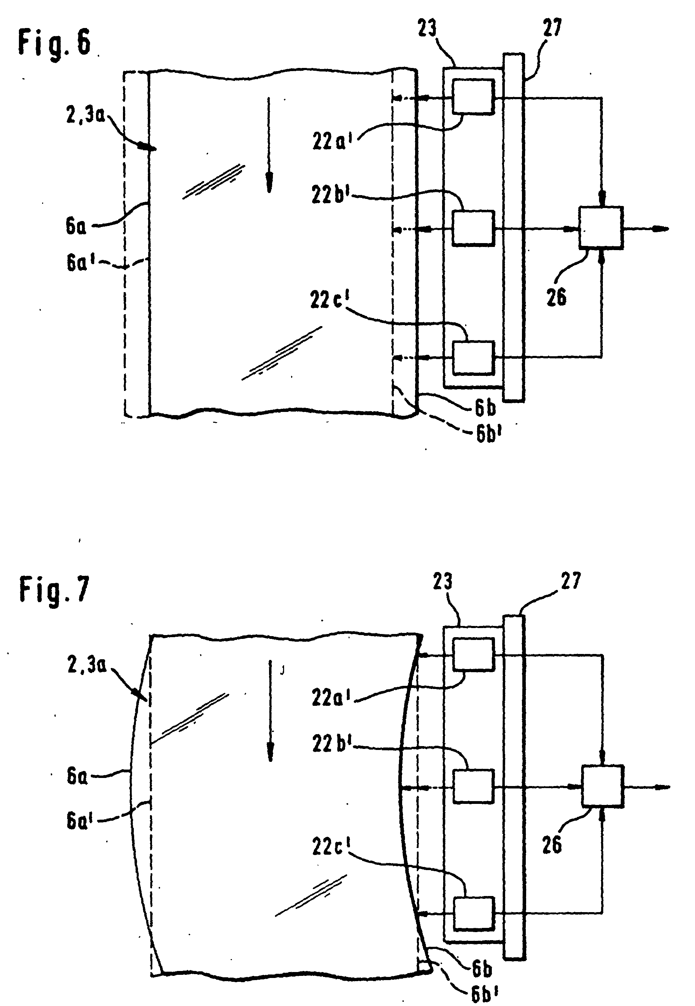

In den Fign. 6 bis 8 ist eine weitere Ausführungsform der Überwachungseinrichtung 20 dargestellt. Anstelle von Rollen sind optische oder Ultraschallsensoren 22a',b' und c' an dem gemeinsamen ortsfesten Trägerelement 27 befestigt. Bei einem seitlichen Versatz des Glasbandes wird dies von den drei Sensoren 22a',b' und c' nachgewiesen, die alle drei dieselbe Verschiebung messen. Diese Werte werden an die Rechnereinheit 26 weitergegeben.

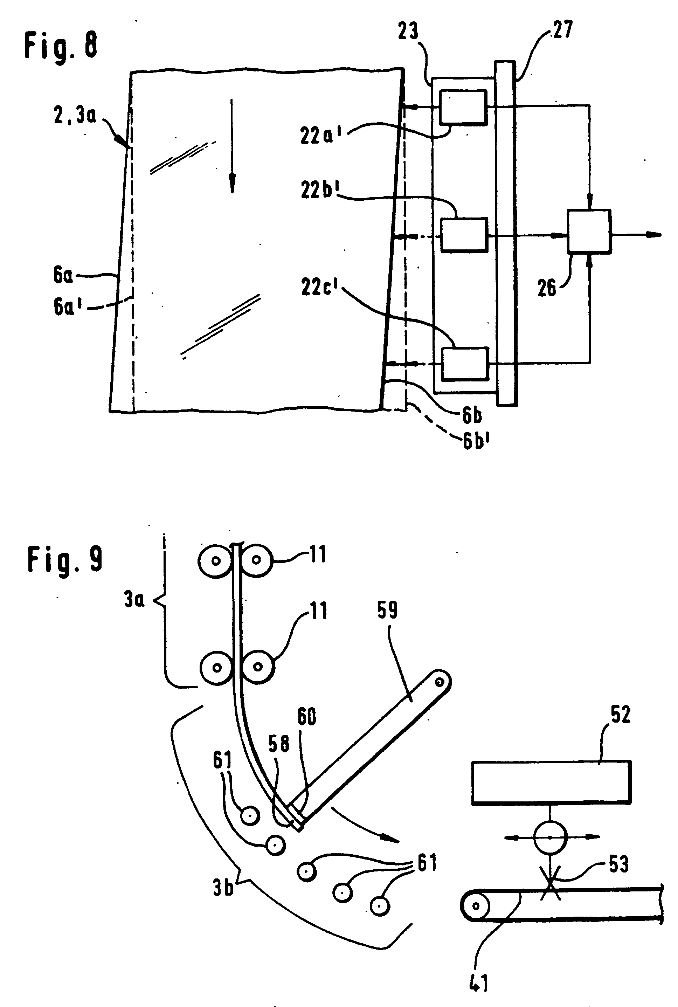

In der Fig. 7 ist die Durchbiegung und in der Fig. 8 der Abweichungswinkel von der Vertikalendargestellt, der von diesen drei Sensoren nachgewiesen werden kann.

In der Fig. 9 ist die Biegezone 3b vergrößert zur Erläuterung der Einfädelung dargestellt. Das vertikale Glasband 3a wird am vorderen Ende 58 zunächst grob abgelängt (dies ist nicht dargestellt) und von einer Schwinge 59 erfäßt, die an ihrem vorderen Ende Vakuumsauger 60 aufweist, mit denen das Glasband erfäßt wird. Die Schwinge 59 wird in Pfeilrichtung verschwenkt, so daß das Glasband dem Transportband 41 zugeführt werden kann. Die Tangentialgeschwindigkeit der Schwinge 59 ist an die Bandgeschwindigkeit angepaßt. Nach der Übergabe an das Transportband 41 wird das Glasband losgelassen.

Unterhalb des Glasbandes befindet sich in der Biegezone 3b beabstandet eine Rollenbahn mit Rollen 61, die im wesentlichen auf einer Kreisbahn angeordnet sind. Diese Rollenbahn befindet sich wenige Zentimeter unterhalb des Glasbandes und dient dazu, das Band umzulenken, wenn ein Glasbruch auftreten sollte. Die Rollenbahn nimmt die Glasbahn auf und führt sie dem horizontalen Vorschubsystem zu. Anschließend wird der Umlenkradius verkleinert, so daß das Glasband von der Rollenbahn wieder abhebt. Während des normalen Betriebes liegt das Glasband in der Biegezone 3b nicht auf diesen Rollen 61 auf.

### Bezugszeichen

- 1: Formgebungseinrichtung
- 1': Abkühlstrecke
- 2: Glasband
- 3a: vertikales Glasband
- 3b: Biegezone
- 3c: horizontales Glasband
- 4: Einzelscheibe
- 5a,b: Glasborte
- 5a',b': abgetrenntes Bortenstück
- 6a,b: Borte
- 6a',b': Borte
- 10: Zieheinrichtung
- 11: Ziehrollenpaar
- 12a,b: Antriebseinrichtung
- 20: Überwachungseinrichtung
- 21: Reglereinrichtung
- 22a,b,c: Rollen
- 22a',b',c': Ultraschallsensoren
- 23: Halterung
- 24a,b: erster und zweiter Verschiebesensor
- 25: Hebelgestänge
- 26: Rechnereinheit
- 27: ortsfestes Trägerelement
- 30: Überwachungseinrichtung für den Umlenkradius
- 31: Ultraschallabstandsensor
- 32: Reglereinrichtung
- 40: horizontale Transporteinrichtung
- 41: Transportband
- 42: Antriebseinrichtung
- 50: Bortenbeschneidungseinrichtung
- 51a,b: Laserstrahl
- 52: Ablängeinrichtung
- 53: Laserstrahl
- 54: Kantenbearbeitungseinrichtung
- 55a,b: Laserstrahl
- 56: Ablängbrecheinrichtung
- 57: Bortenabschnittbrecheinrichtung
- 58: vorderes Ende
- 59: Schwinge
- 60: Vakuumsauger
- 61: Rolle

## Patentansprüche

1. Verfahren zur Herstellung von Einzelglasscheiben der Dicke zwischen 0,03 mm und 2 mm, insbesondere von Glasscheiben für elektronische Geräte, bei dem ein Glasband (2) vertikal aus einer Heißformgebungseinrichtung (1) nach unten abgezogen wird und einer Schneidbearbeitung, die eine Bortenbeschneidung und/oder das Ablängen der Scheiben vom Glasband umfasst, sowie gegebenenfalls Folgeprozessen unterzogen wird, **dadurch gekennzeichnet,**
**dass** nach dem Abziehen das vertikale Glasband (2) auf eine Temperatur unterhalb des unteren Kühlpunktes des Glases, bei der das Glas eine Viskosität von 10^{14,5} dPa·s hat, abgekühlt und anschließend unter Einhaltung eines Umlenkradius von zwischen 0,1 m und 4 m frei hängend in die Horizontale überführt wird, und
**dass** jedenfalls das Ablängen (52) am horizontalen Glasband ausgeführt wird.

2. Verfahren nach Anspruch 1, **dadurch gekennzeichnet, dass** die vertikale Ausrichtung des Glasbandes bezüglich Geradheit, Lage und Winkel ständig überwacht und geregelt wird.

3. Verfahren nach Anspruch 1 oder 2, **dadurch gekennzeichnet, dass** bei Glasscheiben einer Dicke zwischen 0,4 mm und 2 mm ein Umlenkradius von 1,5 m bis 4 m eingehalten wird.

4. Verfahren nach Anspruch 1 oder 2, **dadurch gekennzeichnet, dass** bei Glasscheiben einer Dicke zwischen 0,03 mm und 0,4 mm ein Umlenkradius zwischen 0,1 m und 1,5 m eingehalten wird.

5. Verfahren nach Anspruch 4, **dadurch gekennzeichnet, dass** nach der Bortenbeschneidung (50) das Glasband aufgewickelt wird.

6. Verfahren nach einem der Ansprüche 1 bis 5, **dadurch gekennzeichnet, dass** auch die Bortenbeschneidung (50) am horizontalen Glasband ausgeführt wird.

7. Verfahren nach einem der Ansprüche 1 bis 6, **dadurch gekennzeichnet, dass** das Glasband so weit abgekühlt wird, dass es während der Umlenkung in die Horizontale eine Temperatur zwischen 30 und 80° C aufweist.

8. Verfahren nach einem der Ansprüche 1 bis 7, **dadurch gekennzeichnet, dass** die Vorschubgeschwindigkeit des horizontalen Glasbandes unter Berücksichtigung des Umlenkradius geregelt wird.

9. Verfahren nach einem der Ansprüche 1 bis 8, **dadurch gekennzeichnet, dass** die Vorschubgeschwindigkeit des horizontalen Glasbandes erst nach lang anhaltenden Änderungen des Umlenkradius von mehr als 8 bis 12 Sekunden zur Einstellung des ursprünglichen Umlenkradius verändert wird.

10. Verfahren nach einem der Ansprüche 1 bis 9, **dadurch gekennzeichnet, dass** die vertikale Ausrichtung des Glasbandes an mindestens einer Borte (5a; 5b) überwacht wird.

11. Verfahren nach einem der Ansprüche 1 bis 10, **dadurch gekennzeichnet, dass** bei der Überwachung der vertikalen Ausrichtung des Glasbandes sowohl translatorische Bewegungen des gesamten Glasbandes in der Bandebene als auch Durchbiegungen der Glasborte (5a;5b) erfaßt und durch Anpassung der Ziehgeschwindigkeit oder der Differenz der Ziehgeschwindigkeit an den beiden Glasborten (5a;5b) geregelt werden.

12. Verfahren nach einem der Ansprüche 1 bis 11, **dadurch gekennzeichnet, dass** die Schneidbearbeitung mittels Laserstrahlen (51 a, 56, 53) durchgeführt wird.

13. Verfahren nach einem der Ansprüche 1 bis 12, **dadurch gekennzeichnet, dass** das Schneidwerkzeug (52) zum Ablängen der Scheiben entsprechend der Vorschubgeschwindigkeit des Glasbandes bewegt wird.

14. Verfahren nach einem der Ansprüche 1 bis 13, **dadurch gekennzeichnet, dass** nach der Bortenbeschneidung und vor dem Ablängen die Kanten bearbeitet werden.

15. Verfahren nach einem der Ansprüche 1 bis 14, **dadurch gekennzeichnet, dass** beim Kantenbearbeiten und/oder Bortenbeschneiden das Glas zugspannungsfrei gehalten wird.

16. Vorrichtung zur Herstellung von Einzelglasscheiben einer Dicke zwischen 0,03 mm und 2 mm, insbesondere von Glasscheiben für elektronische Geräte, mit einer Formgebungseinrichtung, einer vertikalen, abwärts arbeitenden Zieheinrichtung und mindestens einer Schneideinrichtung zur Bortenbeschneidung und zum Ablängen der Scheiben, **dadurch gekennzeichnet,**
**dass** im Bereich der vertikalen Zieheinrichtung (10) Sensoren (22a,b,c,22a',b',c') zur Überwachung der vertikalen Ausrichtung des Glasbandes (2) angeordnet sind, die über eine Reglereinrichtung (21) mit der Zieheinrichtung (10) verbunden sind,
**dass** unterhalb der Zieheinrichtung (10) eine horizontale Transporteinrichtung (40) angeordnet ist, wobei mindestens die Schneideinrichtung (52) zum Ablängen im Bereich der horizontalen Transporteinrichtung (40) angeordnet ist,
**dass** zwischen der Zieheinrichtung (10) und der horizontalen Transporteinrichtung (40) eine Biegezone (3b) vorgesehen ist, in der das Glasband (2) frei hängend in die Horizontale umgelenkt wird,
wobei der Weg zwischen Formgebungseinrichtung (1) und Biegezone (3b) so groß gewählt ist und/oder zwischen Formgebungseinrichtung (1) und Biegezone (3b) Kühleinrichtungen vorgesehen sind womit das Glassband (2) so gekühlt wird, dass das Glasband (2) in der Blegezone (3b) eine Temperatur unterhalb des unteren Kühlpunktes des Glases hat, wobei die Viskosität des Glases 10^{14,5} dPa.s ist, und
**dass** im Bereich der Biegezone (3b) eine Einrichtung (30) zur Überwachung des Umlenkradius des frei hängenden Glasbandes angeordnet ist.

17. Vorrichtung nach Anspruch 16, **dadurch gekennzeichnet, dass** die Ablängeinrichtung (52) mindestens einen Laser aufweist.

18. Vorrichtung nach Anspruch 16 oder 17, **dadurch gekennzeichnet, dass** in die Ablängeinrichtung (52) eine Kantenbearbeitungseinrichtung (54) integriert ist.

19. Vorrichtung nach einem der Ansprüche 16 bis 18, **dadurch gekennzeichnet, dass** die Sensoren (22a,b,c, 22a',b',c') mechanische, optische oder Ultraschall-Sensoren sind.

20. Vorrichtung nach einem der Ansprüche 16 bis 19, **dadurch gekennzeichnet, dass** die Einrichtung (30) zur Überwachung des Umlenkradius des Glasbandes mindestens einen in radialer Richtung angeordneten Ultraschallabstandssensor (31) und eine Reglereinrichtung (32) umfaßt.

21. Vorrichtung nach Anspruch 20, **dadurch gekennzeichnet, dass** die Reglereinrichtung (32) mit der Transporteinrichtung (40) verbunden ist.

22. Vorrichtung nach einem der Ansprüche 16 bis 21, **dadurch gekennzeichnet, dass** die Sensoren (22a, b, c, 22a', b', c'), an einer gemeinsamen Halterung (23) angeordnet sind, die an einem ortsfesten Trägerelement (27) gehalten ist.

23. Vorrichtung nach Anspruch 22, **dadurch gekennzeichnet, dass** die Sensoren durch Rollen (22a,b,c) gebildet sind, die an der Glasborte (6b) anliegen, wobei mindestens eine Rolle (22b) bezüglich der Halterung (23) verschiebbar und die Halterung beweglich an dem ortsfesten Trägerelement (27) gehalten ist, wobei sowohl an der verschiebbaren Rolle (22b) als auch an der Halterung (23) jeweils mindestens ein Verschiebungssensor (24a) angeordnet ist.

24. Vorrichtung nach Anspruch 23, **dadurch gekennzeichnet, dass** die verschiebbare Rolle (22b) zwischen den beiden anderen Rollen (22a,22c) angeordnet ist.

25. Vorrichtung nach einem der Ansprüche 22 bis 24, **dadurch gekennzeichnet, dass** die Halterung (23) aus einem Material besteht, dessen Wärmeausdehnungskoeffizient α im Bereich von Raumtemperatur bis 200°C Null ist.

## Claims

1. Process for producing individual glass panes with a thickness of between 0.03 mm and 2 mm, in particular glass panes for electronic devices, in which a glass ribbon (2) is drawn vertically downwards from a hot-shaping device (1) and subjected to a cutting operation, which comprises a border-trimming operation and/or cutting the panes from the glass ribbon, and if appropriate is also subjected to any subsequent processes, **characterized in that** after the vertical glass ribbon (2) has been drawn downwards it is cooled to a temperature below the strain point of the glass, at which the glass has a viscosity of 10^{14.5}dPa·s, and then, maintaining a deflection radius of between 0.1 m and 4 m, is transferred, hanging freely, into the horizontal, and **in that** at least the operation (52) of cutting the individual panes from the glass ribbon is carried out on the horizontal glass ribbon.

2. Process according to Claim 1, **characterized in that** the vertical orientation of the glass ribbon is constantly monitored and controlled for straightness, position and angle.

3. Process according to Claim 1 or 2, **characterized in that** for glass panes with a thickness of between 0.4 mm and 2 mm, a deflection radius of from 1.5 m to 4 m is maintained.

4. Method according to Claim 1 or 2, **characterized in that** for glass panes with a thickness of between 0.03 mm and 0.4 mm a deflection radius of between 0.1 m and 1.5 m is maintained.

5. Process according to Claim 4, **characterized in that** the glass ribbon is coiled after the border trimming operation (50).

6. Process according to one of Claims 1 to 5, **characterized in that** the border trimming operation (50) is also carried out on the horizontal glass ribbon.

7. Process according to one of Claims 1 to 6, **characterized in that** the glass ribbon is cooled to a sufficient extent for it to be at a temperature of between 30 and 80°C during the deflection.

8. Process according to one of Claims 1 to 7, **characterized in that** the rate of advance of the horizontal glass ribbon is controlled taking account of the deflection radius.

9. Process according to one of Claims 1 to 8, **characterized in that** the rate of advance of the horizontal glass ribbon is only changed after prolonged changes to the deflection radius of more than 8 to 12 seconds in order to restore the original deflection radius.

10. Process according to one of Claims 1 to 9, **characterized in that** the vertical orientation of the glass ribbon is monitored at at least one border (5a; 5b).

11. Process according to one of Claims 1 to 10, **characterized in that** during the monitoring of the vertical orientation of the glass ribbon, both translational movements of the glass ribbon as a whole in the ribbon plane and sagging of the glass border (5a; 5b) are recorded and controlled by adapting the drawing rate or the difference between the drawing rates at the two glass borders (5a; 5b).

12. Process according to one of Claims 1 to 11, **characterized in that** the cutting operation is carried out by means of laser beams (51a, 56, 53).

13. Process according to one of Claims 1 to 12, **characterized in that** the cutting tool (52) is moved in accordance with the rate of advance of the glass ribbon in order to cut the panes from the glass ribbon.

14. Process according to one of Claims 1 to 13, **characterized in that** the edges are machined after the border trimming operation and before the individual panes are cut from the glass ribbon.

15. Process according to one of Claims 1 to 14, **characterized in that** the glass is kept free of tensile stresses during the edge machining and/or border trimming operations.

16. Apparatus for producing individual glass panes with a thickness of between 0.03 mm and 2 mm, in particular glass panes for electronic devices, having a shaping device, a vertical drawing device which works in the downwards direction and at least one cutting device for border trimming and for cutting off the panes, **characterized in that** sensors (22a, b, c, 22a', b', c') for monitoring the vertical orientation of the glass ribbon (2) are arranged in the region of the vertical drawing device (10) and are connected to the drawing device (10) via a controller device (21), **in that** a horizontal conveyor device (40) is arranged beneath the drawing device (10), at least the cutting device (52) for cutting off the individual panes being arranged in the region of the horizontal conveyor device (40), **in that** a bending zone (3b), in which the glass ribbon (2) is deflected, hanging freely, into the horizontal, is provided between the drawing device (10) and the horizontal conveyor device (40), the distance between the shaping device (1) and bending zone (3b) being selected to be sufficient, and/or cooling devices being provided between the shaping device (1) and bending zone (3b), for the glass ribbon (2) to be cooled in such a way that the glass ribbon (2) in the bending zone (3b) is at a temperature below the strain point of the glass, at which the viscosity of the glass is 10^{14.5}dPa·s, and **in that** a device (30) for monitoring the deflection radius of the freely hanging glass ribbon is arranged in the region of the bending zone (3b).

17. Apparatus according to Claim 16, **characterized in that** the device (52) for cutting off the individual panes includes at least one laser.

18. Apparatus according to Claim 16 or 17, **characterized in that** an edge-machining device (54) is integrated in the device (52) for cutting off the panes.

19. Apparatus according to one of Claims 16 to 18, **characterized in that** the sensors (22a, b, c, 22a', b', c') are mechanical, optical or ultrasound sensors.

20. Apparatus according to one of Claims 16 to 19, **characterized in that** the device (30) for monitoring the deflection radius of the glass ribbon comprises at least one ultrasound proximity sensor (31), arranged in the radial direction, and a controller device (32).

21. Apparatus according to Claim 20, **characterized in that** the controller device (32) is connected to the conveyor device (40).

22. Apparatus according to one of Claims 16 to 21, **characterized in that** the sensors (22a, b, c, 22a', b', c') are arranged at a common holder (23) which is held at a stationary carrier element (27).

23. Apparatus according to Claim 22, **characterized in that** the sensors are formed by rollers (22a, b, c) which bear against the glass border (6b), at least one roller (22b) being held displaceably with respect to the holder (23), and the holder being held moveably on the stationary carrier element (27), in each case at least one displacement sensor (24a) being arranged both at the displaceable roller (22b) and at the holder (23).

24. Apparatus according to Claim 23, **characterized in that** the displaceable roller (22b) is arranged between the other two rollers (22a, 22c).

25. Apparatus according to one of Claims 22 to 24, **characterized in that** the holder (23) consists of a material whose coefficient of thermal expansion α is zero in the range from room temperature to 200°C.

## Revendications

1. Procédé de fabrication de feuilles de verre simples d'une épaisseur comprise entre 0,03 mm et 2 mm, notamment de feuilles de verre pour appareils électroniques, dans lequel une bande de verre (2) est étirée verticalement vers le bas depuis un dispositif de façonnage à chaud (1) et est soumise à un traitement de découpe qui comprend une découpe des bordures et/ou la découpe à la longueur voulue des feuilles de bande de verre, et est également soumise éventuellement à des processus suivants, **caractérisé en ce que**
la bande de verre verticale (2), après son étirage, est refroidie à une température en dessous du point de refroidissement inférieur du verre, auquel le verre a une viscosité de 10^{14,5} dPa.s et ensuite est ramenée à l'horizontale en maintenant un rayon de déviation compris entre 0,1 m et 4 m en suspension libre, et **en ce que** dans chaque cas, la coupe à la longueur voulue (52) est effectuée sur la bande de verre horizontale.

2. Procédé selon la revendication 1, **caractérisé en ce que** l'orientation verticale de la bande de verre est contrôlée et régulée constamment en termes de linéarité, de position et d'angle.

3. Procédé selon la revendication 1 ou 2, **caractérisé en ce que** pour des feuilles de verre ayant une épaisseur comprise entre 0,4 mm et 2 mm, on conserve un rayon de déviation de 1,5 m à 4 m.

4. Procédé selon la revendication 1 ou 2, **caractérisé en ce que** pour des feuilles de verre ayant une épaisseur comprise entre 0,03 mm et 0,4 mm, on conserve un rayon de déviation compris entre 0,1 m et 1,5 m.

5. Procédé selon la revendication 4, **caractérisé en ce que** la bande de verre est enroulée après la découpe des bordures (50).

6. Procédé selon l'une quelconque des revendications 1 à 5, **caractérisé en ce que** la découpe des bordures (50) est aussi réalisée sur la bande de verre horizontale.

7. Procédé selon l'une quelconque des revendications 1 à 6, **caractérisé en ce que** la bande de verre est refroidie dans une telle mesure qu'elle présente pendant la déviation à l'horizontale une température comprise entre 30 et 80°C.

8. Procédé selon l'une quelconque des revendications 1 à 7, **caractérisé en ce que** la vitesse d'avance de la bande de verre horizontale est régulée en tenant compte du rayon de déviation.

9. Procédé selon l'une quelconque des revendications 1 à 8, **caractérisé en ce que** la vitesse d'avance de la bande de verre horizontale est modifiée seulement après des variations du rayon de déviation persistant longtemps, de plus de 8 à 12 secondes pour l'ajustement du rayon de déviation initial.

10. Procédé selon l'une quelconque des revendications 1 à 9, **caractérisé en ce que** l'orientation verticale de la bande de verre est contrôlée au moins au niveau d'une bordure (5a ; 5b).

11. Procédé selon l'une quelconque des revendications 1 à 10, **caractérisé en ce que** dans le cas du contrôle de l'orientation verticale de la bande de verre, on détecte à la fois des déplacements en translation de l'ensemble de la bande de verre dans le plan de la bande ainsi que des flexions des bordures de verre (5a ; 5b) et on les règle par une adaptation de la vitesse de traction ou de la différence de la vitesse de traction au niveau des deux bordures de verre (5a ; 5b).

12. Procédé selon l'une quelconque des revendications 1 à 11, **caractérisé en ce que** le traitement de découpe est effectué au moyen de faisceaux laser (51a, 56, 53).

13. Procédé selon l'une quelconque des revendications 1 à 12, **caractérisé en ce que** l'outil de coupe (52) pour la découpe à la longueur voulue des feuilles est déplacé en fonction de la vitesse d'avance de la bande de verre.

14. Procédé selon l'une quelconque des revendications 1 à 13, **caractérisé en ce que** les bords sont traités après la découpe des bordures et avant la découpe à la longueur voulue.

15. Procédé selon l'une quelconque des revendications 1 à 14, **caractérisé en ce que** le verre est maintenu sans contrainte de traction lors du traitement des bords et/ou de la découpe des bordures.

16. Dispositif de fabrication de feuilles de verre simples d'une épaisseur comprise entre 0,03 mm et 2 mm, notamment de feuilles de verre pour appareils électroniques, comprenant un dispositif de façonnage, un dispositif de traction vertical, travaillant vers le bas et au moins un dispositif de coupe pour la découpe des bordures et pour la découpe à la longueur voulue des feuilles, **caractérisé en ce que**
dans la région du dispositif de traction vertical (10), sont disposés des capteurs (22a,b,c, 22a',b',c') pour la surveillance de l'orientation verticale de la bande de verre (2), qui sont connectés par le biais d'un dispositif de régulation (21) au dispositif de traction (10),
**en ce qu'**en dessous du dispositif de traction (10) est disposé un dispositif de transport horizontal (40), au moins le dispositif de coupe (52) étant prévu pour effectuer la découpe à la longueur voulue dans la région du dispositif de transport horizontal (40),
**en ce qu'**entre le dispositif de traction (10) et le dispositif de transport horizontal (40) est prévue une zone de flexion (3b), dans laquelle la bande de verre (2) est déviée en suspension libre à l'horizontale,
la distance entre le dispositif de façonnage (1) et la zone de flexion (3b) étant choisie de telle sorte et/ou des dispositifs de refroidissement étant prévus entre le dispositif de façonnage (1) et la zone de flexion (3b), avec lesquels la bande de verre (2) est refroidie de telle sorte, que la bande de verre (2) ait dans la zone de flexion (3b) une température en dessous du point de refroidissement inférieur du verre, la viscosité du verre valant 10^{14,5} dPa.s, et
**en ce que** l'on prévoit dans la région de la zone de flexion (3b), un dispositif (30) de contrôle du rayon de déviation de la bande de verre en suspension libre.

17. Dispositif selon la revendication 16, **caractérisé en ce que** le dispositif de découpe à la longueur (52) présente au moins un laser.

18. Dispositif selon la revendication 16 ou 17, **caractérisé en ce que** l'on intègre dans le dispositif de découpe à la longueur (52) un dispositif de traitement des bords (54).

19. Dispositif selon l'une quelconque des revendications 16 à 18, **caractérisé en ce que** les capteurs (22a,b,c, 22a',b',c') sont des capteurs mécaniques, optiques ou à ultrasons.

20. Dispositif selon l'une quelconque des revendications 16 à 19, **caractérisé en ce que** le dispositif (30) pour le contrôle du rayon de déviation de la bande de verre comprend au moins un capteur de distance à ultrasons (31) disposé dans la direction radiale et un dispositif de régulation (32).

21. Dispositif selon la revendication 20, **caractérisé en ce que** le dispositif de régulation (32) est connecté au dispositif de transport (40).

22. Dispositif selon l'une quelconque des revendications 16 à 21, **caractérisé en ce que** les capteurs (22a,b,c, 22a',b',c') sont disposés sur une fixation commune (23) qui est maintenue sur un élément de support fixe (27).

23. Dispositif selon la revendication 22, **caractérisé en ce que** les capteurs sont formés par des rouleaux (22a,b,c) qui s'appliquent contre la bordure en verre (6b), au moins un rouleau (22b) pouvant être déplacé par rapport à la fixation (23) et la fixation étant maintenue mobile sur l'élément de support fixe (27), un capteur de déplacement (24a) étant disposé respectivement à la fois sur le rouleau déplaçable (22b) et sur la fixation (23).

24. Dispositif selon la revendication 23, **caractérisé en ce que** le rouleau déplaçable (22b) est disposé entre les deux autres rouleaux (22a, 22c).

25. Dispositif selon l'une quelconque des revendications 22 à 24, **caractérisé en ce que** la fixation (23) se compose d'un matériau dont le coefficient de dilatation thermique α est nul dans une plage de températures allant jusqu'à 200°C.
